# EUROPÄISCHE PATENTANMELDUNG

(11) **EP 4 764 249 A1**
(43) Veröffentlichungstag der Anmeldung: **24.06.2026**
(21) Anmeldenummer: 25218699.4
(22) Anmeldetag: 26.11.2025
(51) Int. Cl.: F16F 3/10, F16F 1/362, F16F 15/08, F16F 1/38, B61C 17/00, B61F 1/00

(54) **BEFESTIGUNGSVORRICHTUNG ZUR ELASTISCHEN AUFHÄNGUNG EINER FAHRZEUGKOMPONENTE AN EINEM FAHRZEUG**

(30) Priorität: 19.12.2024 DE 102024212167
(71) Anmelder: Siemens Mobility GmbH, 80997 München (DE)
(72) Erfinder: Dornberger, Peter, 91058 Erlangen (DE); Giesert, Andreas, 91058 Erlangen (DE)
(74) Vertreter: Siemens Patent Attorneys

(57) **Zusammenfassung**

Die Erfindung betrifft eine Befestigungsvorrichtung (20) zur elastischen Aufhängung einer Fahrzeugkomponente (31) an einem Fahrzeug (30), die Befestigungsvorrichtung (20) umfassend ein äußeres Gehäuse (1), das an dem Fahrzeug (30) befestigbar ist und ein in dem Gehäuse (1) angeordnetes Aufnahmebauteil (2), das gegenüber dem Gehäuse (1) mittels elastischer Elemente (5) gelagert ist und eine Lagerung (8) für ein Befestigungselement der Fahrzeugkomponente (31) aufweist, wobei das Gehäuse (1) einen zentralen, ringförmigen Abschnitt (3) mit der Aufnahmeöffnung (4) zur Aufnahme des Aufnahmebauteils (2) aufweist, und wobei das Aufnahmebauteil (2) unter Zwischenlage der elastischen Elemente (5) in die Aufnahmeöffnung (4) des Gehäuses (1) eingesetzt ist und zumindest ein Teil der elastischen Elemente (5) aus Druckfedern (5a) gebildet wird.

Des Weiteren umfasst die Erfindung ein Fahrzeug.

## Beschreibung

Die Erfindung betrifft eine Befestigungsvorrichtung zur elastischen Aufhängung einer Fahrzeugkomponente an einem Fahrzeug und ein Fahrzeug mit mindestens einer solchen Befestigungsvorrichtung.

Eine Aufhängung einer Fahrzeugkomponente an einem Fahrzeug kann mit Problemen verbunden sein, insbesondere wenn es sich um eine Großkomponente handelt, beispielsweise mit einer Masse von 4 bis 8 t an der Fahrzeugstruktur eines Schienenfahrzeugs. Hier können insbesondere zwei Problematiken auftreten: Die Großkomponente und der Rohbau können aus unterschiedlichen Werkstoffen mit unterschiedlichen Wärmeausdehnungskoeffizienten bestehen, und die Großkomponente kann im Betrieb zum Schwingen angeregt werden, z.B. durch Transformatorspulen (Trafobrummen), Motoren oder Kompressoren.

Bekannte Befestigungsvorrichtungen weisen ein äußeres Gehäuse auf, das an dem Rohbau des Fahrzeugs befestigbar ist, und ein in dem Gehäuse angeordnetes Aufnahmebauteil, das gegenüber dem Gehäuse mittels elastischer Elemente gelagert ist und eine Lagerung für ein Befestigungselement der Komponente des Fahrzeugs aufweist. Solche Befestigungsvorrichtungen werden insbesondere zur Aufhängung von Großkomponenten (Unterflur, wie z.B. ein Haupttransformator mit Kühlanlage, eine Netzfilterdrossel, ein Energieversorgungsblock EVB, eine Containereinheit E-Geräte, ein Bremscontainer, Batterien, Stromrichter, eine Netzdrossel oder auf dem Dach wie z.B. ein Bremswiderstand) an der tragenden Struktur eines Schienenfahrzeugs eingesetzt.

In dem Fall, dass die Großkomponente und die tragende Struktur ("Rohbau") des Schienenfahrzeugs aus unterschiedlichen Werkstoffen bestehen, deren Wärmeausdehnungskoeffizienten ebenfalls verschieden sind, sollte die Befestigungsvorrichtung dazu geeignet sein, unterschiedliche thermische Ausdehnungen der Komponente und des Rohbaus des Schienenfahrzeugs auszugleichen, wie sie z.B. auftreten, wenn sich die Temperatur an der Befestigungsvorrichtung im Betrieb des Schienenfahrzeugs, ausgehend von einer Montagetemperatur von 20°C, auf eine Betriebstemperatur von beispielsweise 60°C erhöht und der Rohbau des Schienenfahrzeugs aus Aluminium, die Fahrzeugkomponente jedoch aus Stahl oder einem Kompositwerkstoff hergestellt ist.

Auch sollte die Befestigungsvorrichtung eine Entkopplung von Schwingungen der mittels der Befestigungsvorrichtung gelagerten Fahrzeugkomponente zulassen. Dies erfordert eine elastische Lagerung der Komponente gegenüber dem Fahrzeug. Eine Übertragung der Schwingungen der Komponente auf das Fahrzeug hätte die Nachteile einer höheren Geräuschemission und einem verringerten Fahrkomfort. Zudem würden auch die Anbindungspunkte zwischen Komponente und Rohbau ohne Schwingungsentkopplung stärker dynamisch beansprucht werden und müssten entsprechend größer dimensioniert werden.

Bisher werden diese Anforderungen an die Befestigungsvorrichtung vorrangig durch den Einsatz von Gummimetall-Elementen erfüllt. Beispielsweise kann ein Keillager verwendet werden, bei dem eine schwingungsmäßige Entkopplung (=Schwingungsisolation) der Komponente vom Rohbau des Fahrzeugs über vulkanisierte Gummielemente erfolgt. Der Einsatz dieser Gummielemente hat jedoch den erheblichen Nachteil, dass das Gummi einer starken Alterung unterworfen ist und ein undefiniertes Alterungsverhalten hat. Dies hat zur Folge, dass die Gummielemente regelmäßig ausgetauscht werden müssen, wodurch hohe Wartungskosten am Fahrzeug entstehen, weil der Wartungsaufwand durch das erforderliche Lösen insbesondere der Großkomponenten sehr erheblich ist. Zudem sind die Isolationseigenschaften von Gummi temperaturabhängig und seine Steifigkeit ist nach Herstellung (Vulkanisierung) nicht beeinflussbar.

Seit kurzem gibt es Ganzmetalllager, bei der an Stelle von Gummielementen Kissen aus einem Gewirk aus Metalldraht verwendet werden. Diese Metallkissen haben eine gute mechanische Schwingungsisolierung (Entkopplung), jedoch können trotzdem Störgeräusche im Wagenkasten ankommen und den Komfort mindern. Zudem ist auch hier keine direkte Beeinflussung der Steifigkeit möglich, außer eingeschränkt durch die Verwendung mehrerer Metallkissen in Parallel- und Reihenschaltungen. Eine optimale Anpassung einer Befestigungsvorrichtung an das Gewicht einer Fahrzeugkomponente ist nicht möglich.

Es ist eine Aufgabe der vorliegenden Erfindung, eine Befestigungsvorrichtung zur elastischen Aufhängung einer Fahrzeugkomponente an einem Fahrzeug und ein Fahrzeug anzugeben, mit denen die oben beschriebenen Nachteile vermieden werden.

Diese Aufgabe wird durch eine Befestigungsvorrichtung gemäß Patentanspruch 1 und ein Fahrzeug gemäß Patentanspruch 10 gelöst.

Eine erfindungsgemäße Befestigungsvorrichtung dient zur elastischen Aufhängung einer Fahrzeugkomponente an einem Fahrzeug, insbesondere an der tragenden Struktur (dem Rohbau) des Fahrzeugs. Sie umfasst ein äußeres Gehäuse, das an dem Fahrzeug befestigbar ist und ein in dem Gehäuse angeordnetes Aufnahmebauteil, das gegenüber dem Gehäuse mittels elastischer Elemente gelagert ist und eine Lagerung für ein Befestigungselement der Komponente des Fahrzeugs aufweist. Das Gehäuse weist dabei einen, insbesondere zentralen, ringförmigen Abschnitt mit einer Aufnahmeöffnung zur Aufnahme des Aufnahmebauteils auf. Zudem ist das Aufnahmebauteil unter Zwischenlage der elastischen Elemente in die Aufnahmeöffnung des Gehäuses eingesetzt und zumindest ein Teil der elastischen Elemente wird aus Druckfedern gebildet.

Die Befestigungsvorrichtung besteht also aus mehreren Komponenten, die gemeinsam eine weitestgehend wartungsfreie, elastische Aufhängung einer Fahrzeugkomponente an einem Fahrzeug ermöglichen. Das Fahrzeug ist bevorzugt ein Schienenfahrzeug wie z.B. eine Lok oder eine sogenannte "Multiple Unit" wie ein moderner Schnellzug mit antreibenden Komponenten in einzelnen Zugabschnitten.

Diese Befestigungsvorrichtung weist ein Gehäuse auf, welches als fester Verankerungspunkt am Fahrzeug dient. Es ist so konzipiert, dass es auf einfache Weise sicher und fest am Fahrzeug befestigt werden kann. Das Gehäuse weist bevorzugt Löcher für Schrauben auf, mit denen das Gehäuse am Fahrzeug montiert werden kann. Theoretisch könnte das Gehäuse auch an das Fahrzeug angeschweißt oder angeklebt werden, wobei jedoch eine Schraubverbindung bevorzugt ist. Das Gehäuse bietet eine stabile Basis für die Aufnahme des Aufnahmebauteils. Ein Beispiel für ein Gehäuse wäre ein Körper aus Stahl oder Aluminium, welcher in seiner Mitte ein Aufnahmebauteil aufnehmen kann und an seinen Seiten Auswüchse hat, in denen Löcher für eine Verschraubung am Fahrzeug angeordnet sind.

In dem Gehäuse ist das Aufnahmebauteil angeordnet, so dass es gegenüber dem Gehäuse mittels elastischer Elemente gelagert ist. Es enthält eine spezielle Lagerung für das Befestigungselement der Fahrzeugkomponente. Die Lagerung kann z.B. ein Loch sein, in das ein Bolzen als Befestigungselement der Fahrzeugkomponente hineingeschoben werden kann oder eine Schraube hineingeschoben werden kann, mittels der die Fahrzeugkomponente am Aufnahmebauteil festgeschraubt werden kann. Auch kann die Lagerung ein Bolzen sein, welcher in ein passendes Loch in der Fahrzeugkomponente eingeschoben werden kann. Wie eine Fahrzeugkomponente an einem Aufnahmebauteil gehaltert werden kann, ist jedoch nicht Teil der Erfindung und dem Fachmann hinlänglich bekannt. Durch seine Lagerung mittels elastischer Elemente bietet das Aufnahmebauteil die notwendige Elastizität, um Stöße und Vibrationen zu dämpfen, und bietet gleichzeitig eine sichere Verbindung für die Fahrzeugkomponente. Ein Beispiel wäre ein quaderförmiges Element aus Stahl oder Aluminium mit einer zentralen Bohrung.

Das Aufnahmebauteil ist in einem zentralen, ringförmigen Abschnitt des Gehäuses untergebracht, dieser Abschnitt weist eine Aufnahmeöffnung zur Aufnahme des Aufnahmebauteils auf.

Der Ausdruck "ringförmig" bedeutet hier nicht zwingend "kreisrund", sondern bedeutet, dass das Aufnahmebauteil in einer Ebene komplett von Material des Gehäuses umschlossen ist. blickt man auf diese Ebene drauf, dann schaut man auf das Aufnahmebauteil.

Es sei an dieser Stelle angemerkt, dass es zwar von Vorteil sein kann, dass die Aufnahmeöffnung im Gehäuse so gestaltet ist, dass das Aufnahmebauteil von vorne oder hinten in das Gehäuse eingeschoben werden kann. Dies ist aber nicht in jedem Falle unbedingt notwendig. Es ist lediglich erforderlich, dass die Fahrzeugkomponente elastisch gelagert werden kann, also eine Öffnung mit so viel Spiel in der Wandung des Gehäuses vorhanden ist, dass eine in der Lagerung gelagerte Fahrzeugkomponente nicht mit dem Gehäuse kollidiert. Das Gehäuse muss jedoch auf jeden Fall in seinem Inneren eine Aufnahmeöffnung aufweisen. Beispielsweise könnte das Gehäuse einstückig gestaltet sein, mit einer Aufnahmeöffnung, die bis zum Rand reicht, zweistückig, aus zwei Halbschalen, in deren Mitte (dort wo sie zusammengesetzt werden) die Aufnahmeöffnung ist und an ihren Rändern Öffnungen für das Spiel der Fahrzeugkomponente, oder zweistückig oder mehrstückig aus z.B. dem ersteren Teil, welches jedoch mit einer Randverkleidung versehen ist, um ein seitliches Herausdrücken des Aufnahmebauteils zu verhindern.

Im Hinblick auf Koordinaten bzw. Lageangaben bezüglich der Befestigungsvorrichtung sei gesagt, dass mit "oben" diejenige Seite gemeint ist, mit der sie am Fahrzeug angebracht wird (da sie typischerweise hängend angebracht wird), "unten" die gegenüberliegende Seite und "seitlich" die anderen beiden Seiten, an denen das Aufnahmebauteil vom Gehäuse umschlossen ist. Mit "vorne" ist die Seite gemeint an denen später die Fahrzeugkomponente angeordnet werden kann und mit "hinten" die entsprechend gegenüberliegende Seite.

Die elastischen Elemente bilden das Herzstück der Befestigungsvorrichtung. Diese Elemente dienen der Entkopplung (Dämpfung) von Bewegungen und Stößen und Dämpfung von Schwingungen zwischen dem Aufnahmebauteil und dem äußeren Gehäuse. Wie oben gesagt, ist es bereits bekannt, Gummipuffer bzw. Metallkissen zu verwenden. Diese können zwar durchaus zusätzlich noch verwendet werden, wobei Metallkissen bevorzugt sind, da sich Gummipuffer mit der Zeit abnutzen, jedoch ist ein sehr wichtiger Aspekt der Erfindung, dass auf jeden Fall Druckfedern als elastische Elemente verwendet werden. Dazu besteht mindestens ein Teil dieser Elemente aus Druckfedern, von denen bevorzugt zumindest ein Teil unter dem Aufnahmebauteil angeordnet ist. Diese ermöglichen nicht nur die elastische Lagerung des Aufnahmebauteils innerhalb des Gehäuses, sondern auch eine Erhöhung der Schwingungsisolierung (Reduktion von Vibrationen) und einer damit verbundenen Erhöhung des Komforts. Zudem sind sie auch weitestgehend wartungsfrei und bieten darüber hinaus den Vorteil, dass ihre Federkraft und damit die Steifigkeit der Lagerung eingestellt werden kann. Ein bevorzugtes Beispiel für Druckfedern sind zylindrische Schraubdruckfedern (z.B. aus Edelstahl) mit definierten Federkonstanten. Ihre Federkraft sollte an die spezifischen Anforderungen der Aufhängung, insbesondere an bekannte Parameter der Fahrzeugkomponente angepasst sein, wie Gewicht, Erregerfrequenz. Auch wenn z.B. Blattfedern verwendet werden können, sind Spiralfedern bevorzugt. Es kann ein einziges elastisches Element aus einer Druckfeder gebildet werden oder mehrere solche Elemente.

Die elastischen Elemente sind im verbauten Zustand bevorzugt vorgespannt. Durch das Vorspannen kann die Steifigkeit des Lagers an den jeweiligen Anwendungsfall angepasst werden. Weniger Vorspannung sorgt für ein weicheres Lager und damit für höhere Schwingungsisolierung, mehr Vorspannung für ein steiferes Lager und damit zu einer niedrigeren Isolation.

Mit der Verwendung von Druckfedern für Befestigungsvorrichtungen werden Elemente verwendet, deren Federkraft definiert und durchaus auch einstellbar ist, z.B. durch Hinzufügen einer Spannung durch Anbringen eines Vorspannelements, z.B. einer Metallplatte unter oder über der Feder. Nachfolgend wird der daraus resultierende Vorteil etwas ausführlicher erläutert. Vorspannelemente dienen primär zur Aufnahme und Führung der Schraubendruckfeder. Zudem können diese beiden Bauteile zueinander den Anschlag in Bewegungsrichtung der Druckfeder abbilden, um ein Überdrücken dieser zu vermeiden. Die Dimensionen der Vorspannelemente legen auch die Vorspannung der Druckfeder fest, und ermöglichen bei Verwendung der Lager für unterschiedliche Fahrzeuge bzw. Fahrzeugkomponenten die identische Verwendung von Aufnahmebauteil und Gehäuse. Eine Variantengenerierung des Lagers kann also somit lediglich durch eine Variation der Vorspannelemente, als auch der Federn erreicht werden.

Um eine mechanische Entkopplung zu erreichen, sollte eine Fahrzeugkomponente möglichst elastisch weich gelagert werden. Um das Fahrzeug vor der Übertragung der Schwingung der Fahrzeugkomponente zu schützen, ist eine aktive Isolation bzw. Quellenisolierung vorteilhaft. Dies wird durch eine möglichst geringe Durchlässigkeit, VD < 1 erreicht. Die Durchlässigkeit ist das Verhältnis der Kraft auf die Umgebung zur Erregerkraft (VD = Ff/Fe) mit der auf das Fahrzeug wirkenden Kraft Ff und der durch die Fahrzeugkomponente hervorgerufene Erregerkraft Fe.

Erklärung der Entkopplung am Beispiel eines federnd gelagerten Einmassenschwingers: Die Höhe der Durchlässigkeit VD steht in einem schwingenden System in Zusammenhang mit dem Frequenzverhältnis η. Das Frequenzverhältnis η berechnet sich aus der Erregerfrequenz ω der gelagerten Großkomponente, z.B. Betriebsfrequenz des Transformators (16,7, 50 oder 60 Hz), und der Eigenfrequenz ω₀ des Systems (η = ω/ω₀). Der Wert für die Durchlässigkeit VD eines Einmassenschwingers ist maximal, wenn die Erregerfrequenz der Eigenfrequenz entspricht, was mitunter auch als "Resonanzkatastrophe" bezeichnet wird. Betrachtet man ein Diagramm, welches den Zusammenhang zwischen Durchlässigkeit VD und Frequenzverhältnis η anzeigt, dann sieht man von dem Wert 1 startend bei zunehmenden Frequenzverhältnis η zunächst eine steilen Anstieg der Durchlässigkeit VD bis zu einem sehr großen Wert η = 1 (besagte Resonanzkatastrophe) gefolgt von einem ähnlich starken Abfall zurück auf den Wert 1 bei ungefähr η = √2. Für größere η fällt der Wert der Durchlässigkeit VD auf unter 1, was der gewünschte Bereich ist. Das System arbeitet in diesem Bereich dann schwingungsisolierend. Deshalb liegt in diesem Bereich der ideale Betriebspunkt einer isolierenden Lagerung für die Befestigungsvorrichtungen.

Die Eigenfrequenz ω₀ des Systems Fahrzeugkomponente & Befestigungsvorrichtung(en) berechnet sich aus der (resultierenden) Federkonstante k der Befestigungsvorrichtung(en) und der Masse m der Fahrzeugkomponente (w₀² = k/m). Da die Masse m der Fahrzeugkomponente im Grunde vorgegeben ist, bleibt die (resultierende) Federkonstante k als frei einstellbarer Parameter übrig. Da eine Vorspannung eines Systems aus Federn dessen resultierende Federkonstante verändert, kann sowohl durch eine geeignete Wahl der Druckfedern als auch durch eine geeignete Einstellung der Vorspannung gezielt eine Durchlässigkeit VD auf unter 1 eingestellt werden. Metallkissen können dann z.B. noch für eine gewünschte Dämpfung sorgen.

Da eine Druckfeder eine klar definierte (und berechenbare) Federkonstante hat und ein System aus Druckfedern ebenfalls, ist die Verwendung von Druckfedern ideal, für eine vorbekannte Fahrzeugkomponente mit bekannter Masse und Erregerfrequenz Befestigungsvorrichtung(en) zu konstruieren, die eine Aufhängung mit einer Durchlässigkeit VD < 1 ermöglichen. Zudem kann die Durchlässigkeit VD durch nachträgliche Veränderung der Vorspannung der Druckfedern noch angepasst werden. Dies kann z.B. durch Austausch einzelner Federn oder durch Hinzufügen oder Wegnehmen von Vorspannelemente erfolgen.

Ein erfindungsgemäßes Fahrzeug ist insbesondere Schienenfahrzeug. Es umfasst eine Mehrzahl von Befestigungsvorrichtungen gemäß der Erfindung, welche an dem Fahrzeug befestigt sind, insbesondere am Fahrzeugrahmen (der tragenden Struktur des Fahrzeugs, dem "Rohbau"). Zusätzlich umfasst das Fahrzeug bevorzugt eine in diesen Befestigungsvorrichtungen gehalterte Fahrzeugkomponente, insbesondere umfassend einen Transformator, z.B. einen Haupttransformator, ggf. mit Kühlanlage, eine Netzfilterdrossel, einen Energieversorgungsblock EVB, eine Containereinheit E-Geräte, einen Bremscontainer, Batterien, Stromrichter, eine Netzdrossel oder einen Bremswiderstand. Das Fahrzeug kann aber auch nur mit Befestigungsvorrichtungen ausgestattet sein, z.B. um Lasten von einem Ort zum anderen zu verbringen.

Durch die Erfindung werden mehrere Probleme gelöst, nämlich die Entkopplung der Fahrzeugkomponente (Dehnungsentkopplung und Schwingungsentkopplung/-isolierung), eine Wartungsfreiheit der Anbindung, zumindest wenn elastische Elemente aus Metall verwendet werden, und die Möglichkeit der Aufnahme hoher Lasten. Zusätzlich zu den Problemlösungen, die ein (bekanntes) Ganzmetalllager aus Metallkissen liefert, bietet ein hier vorgestelltes Ganzmetall-Feder-Lager folgende Eigenschaften:
1. Die Lagerung im Betriebspunkt wird weicher (geringere Steifigkeit im Betriebspunkt). Dadurch wird das Frequenzverhältnis höher und Schwingungen können zuverlässig isoliert werden. Es ist dadurch ein dauerhafter überkritischer Betrieb möglich.
2. Durch Variation des Einbaumaßes ist die Vorspannung eines Druckfeder-Metallkissen Federpakets bei Auslegung des Lagers stufenlos einstellbar und an Gegebenheiten auf einfache Weise anpassbar.
3. Durch Variation der verwendeten Druckfedern und Variation der Anordnung und Anzahl von Metallkissen, sind unterschiedliche Massen isolierend lagerfähig.
4. Durch Wahlmöglichkeit der Federkonstanten der Druckfedern und Variation der Vorspannung mittels Vorspannelementen (z.B. Unterlegplatten) kann ein einziger Typ von Befestigungsvorrichtung für unterschiedliche Vorgaben (z.B. Trafomasse und -frequenzen) verwendet werden.

Eine Wartungsfreiheit kann dadurch realisiert werden, dass kein Elastomer bei den elastischen Elementen verbaut ist. Beispielsweise können Edelstahl-Metallkissen und Schraubendruckfedern aus Edelstahl komplett wartungsfrei und dauerfest ausgestaltet werden. Die Gehäuseteile zur Befestigung dieser Kissen und Schraubendruckfedern können ebenfalls wartungsfrei gestaltet werden. Jedoch könnten Pufferkissen aus Elastomeren eine preisgünstige Variante darstellen. Eine Aufnahme von hohen Lasten kann dadurch realisiert werden, dass mehrere Druckfedern und ggf. auch andere elastische Elemente, wie z.B. Metallkissen parallel zueinander angeordnet werden. Bevorzugt für den Werkstoff der Druckfedern ist ein mit Korrosionsschutz beschichteter Stahl, da dieser eine sehr hohe Dauerfestigkeit hat.

Eine einfache und robuste Ausführungsform für die Praxis kann aus einem Gehäuse und einem Aufnahmebauteil (insbesondere aus Edelstahl oder Aluminium) gebildet werden, die beide vorteilhafter Weise einstückig ausgeformt sind. Zwischen den Bauteilen ist eine Anzahl von Druckfedern angeordnet, bevorzugt wobei zumindest eine Druckfeder unter dem Aufnahmebauteil angeordnet ist. Über dem Aufnahmebauteil sollte eine Anzahl weiterer elastischer Elemente angeordnet sein, um Bewegungen nach oben elastisch zu entkoppeln. Hier bieten sich Metallkissen an, es können aber auch dort Druckfedern vorhanden sein. Um Bewegungen zu weiteren Seiten des Gehäuses elastisch zu entkoppeln, sind bevorzugt auch dort elastische Elemente angeordnet, besonders bevorzugt Metallkissen. Generell sei gesagt, dass alle Bewegungsmöglichkeiten des Aufnahmebauteils in der ringförmigen Öffnung des Gehäuses elastisch entkoppelt sein sollten, wobei eine elastische Entkopplung nach unten durch die Druckfedern erfolgen sollte. Eine vollständige elastische Lagerung in alle Bewegungsrichtungen kann auch erst durch einen Lagerverbund aus zwei gegenüberliegenden bzw. zueinander ausgerichteten Lagern erzeugt werden.

Die Befestigung am Fahrzeug kann in der Praxis mittels Schrauben erfolgen, die durch Bohrungen im Gehäuse gesteckt und in entsprechenden Gewindebohrungen am Fahrzeug verschraubt werden. Die Gewindebohrungen sollten in oder an der tragenden Struktur des Fahrzeugs vorhanden sein. Die Dimensionierung der Bauteile (zumindest Gehäuse, Aufnahmebauteil und Druckfedern) ist abhängig von der zu lagernden Fahrzeugkomponente. Allerdings ist eine nachträgliche Anpassung der Vorspannung des Federpaketes durch Vorspannelemente, z.B. ringförmige Einleger unter oder über die Druckfedern möglich.

Bei einer praktischen Variante könnten das Gehäuse und/oder das Aufnahmebauteil aus einem gefrästen Aluminiumteil bestehen. Dieses trägt zur Gewichtsreduktion bei. Hier könnten sich aber aufgrund unterschiedlicher Materialien elektrische Spannungen aufbauen. Generell ist bevorzugt, dass das Aufnahmebauteil von dem Gehäuse galvanisch getrennt ist, zumindest wenn Gehäuse und Aufnahmebauteil aus unterschiedlichen Materialien bestehen. Entsprechendes gilt auch für die elastischen Elemente. Wenn ein elastisches Element aus einem anderen Metall besteht als das Gehäuse oder das Aufnahmebauteil, dann sollte es von diesem Teil galvanisch getrennt sein. Die Trennung dient zum Korrosionsschutz der Bauteile. Eine galvanische Trennung kann z.B. durch ein, insbesondere elektrisch isolierendes, Blech erreicht werden, welches zwischen den entsprechenden Teilen angeordnet ist und diese elektrisch voneinander isoliert. Generell ist also bevorzugt, dass zwischen zwei Komponenten der Befestigungsvorrichtung, insbesondere wenn diese aus unterschiedlichen Metallen oder Metallgemischen gebildet werden, eine elektrisch isolierende Trennplatte angeordnet ist.

Um die elastischen Elemente zu schützen, kann die Befestigungsvorrichtung Anschlagselemente an Gehäuse und Aufnahmebauteil aufweisen, die aneinanderschlagen bevor ein elastisches Element in einen kritischen Bereich gerät. Die Anschlagselemente (Anschläge) können über eine Profilkontur von Gehäuse und Aufnahmebauteil, z.B. auf der Rückseite (der bestimmungsgemäß der Fahrzeugkomponente abgewandten Seite) realisiert werden. Sie verhindern insbesondere ein Überdrücken der Druckfedern und Metallkissen.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Eine bevorzugte Befestigungsvorrichtung zeichnet sich dadurch aus, dass ein Teil der elastischen Elemente von Elastomer- und/oder Metallkissen gebildet wird, bevorzugt von Ganzmetallkissen. Unterschiedlichste Anordnungen der Druckfedern und Metallkissen um das Aufnahmebauteil herum sind denkbar. Hierbei können sich Druckfedern und Metallkissen ergänzen und sie können in unterschiedlichen Winkeln und Ausrichtungen um das Zentrum der Lagerung eingesetzt sein. Eine beispielhafte Befestigungsvorrichtung kann aus lediglich zwei Edelstahl Bauteilen, mehreren Edelstahl-Metallkissen und zwei Druckfedern gebildet werden. Die zu lagernde Komponente wird in der Aufnahmebohrung des Aufnahmebauteils gelagert.

Eine bevorzugte Befestigungsvorrichtung zeichnet sich dadurch aus, dass das Gehäuse einstückig ausgebildet ist, bevorzugt aus Stahl oder Aluminium. Diesbezüglich sind besonders Frästeile bevorzugt.

Das Gehäuse weist bevorzugt von dem zentralen Abschnitt aus nach außen vorstehende Befestigungsabschnitte zur Befestigung des Gehäuses an dem Rohbau des Fahrzeugs auf. Die Befestigung an der tragenden Struktur des Fahrzeugs erfolgt bevorzugt über Schrauben, die durch diese Bohrungen im Gehäuse am Fahrzeug verschraubt werden.

Bevorzugt sind das Aufnahmebauteil und der zentrale, ringförmige Abschnitt des Gehäuses jeweils im Querschnitt allgemein rechtwinkelig ausgebildet und die Befestigungsabschnitte des Gehäuses erstrecken sich in Verlängerung einer Seite des zentralen, ringförmigen Abschnittes.

Eine bevorzugte Befestigungsvorrichtung zeichnet sich dadurch aus, dass die Druckfedern so angeordnet sind, dass sie vorgespannt sind, also mit einer Kraft gegen das Aufnahmebauteil drücken. Es ist dabei bevorzugt, dass eine Anzahl von Vorspannelementen an zumindest einer der Stirnseiten (den kraftausübenden Seiten) der Druckfedern angeordnet ist. Durch Variieren der Vorspannelemente kann die Vorspannung eingestellt werden. Damit bei Belastung des Lagers immer alle Metallkissen und Druckfedern in Kontakt zur inneren Aufnahme und zu dem Gehäuse haben, sind diese bevorzugt vorgespannt. Die Druckfedern als auch die anderen elastischen Elemente sollten so vorgespannt verbaut sein, dass weder die Druckfedern noch die anderen elastischen Elemente (z.B. Metallkissen) im Betrieb die Vorspannung gänzlich verlieren können. Ein vorgespannter Zustand kann durch zusätzliche Bauteile während Montage für Weitertransport und Lagerung bis zur Anbringung am Fahrzeug aufrechterhalten werden, wobei diese Bauteile bevorzugt eine Vorspannung axial zur ringförmigen Anordnung einbringen können und nach Ausrichtung und Befestigung der Fahrzeugkomponente am Fahrzeug entfernt und wiederverwendet werden können.

Zur Montage sollte hierfür das Gehäuse in einer Halterung platziert werden, die Kissen und Druckfedern vorgespannt und in das Aufnahmebauteil eingelegt und dort angepresst werden. Das Aufnahmebauteil wird anschließend über die Bohrung geführt in das Gehäuse eingepresst.

Eine bevorzugte Befestigungsvorrichtung zeichnet sich dadurch aus, dass das Aufnahmebauteil an seinen dem Gehäuse zugewandten Umfangsabschnitten Vertiefungen (z.B. Ausnehmungen), zur Aufnahme der elastischen Elemente aufweist. Alternativ oder zusätzlich umfasst das Gehäuse an seinen dem Aufnahmebauteil zugewandten Umfangsabschnitten Vertiefungen, zur Aufnahme der elastischen Elemente. Diese Vertiefungen dienen einer sicheren Aufnahme der elastischen Elemente und können durchaus abschnittweise variieren.

Eine bevorzugte Befestigungsvorrichtung zeichnet sich dadurch aus, dass das Aufnahmebauteil und die (bzw. einige der) elastischen Elemente vormontiert sind und diese vormontierte Einheit in die Aufnahmeöffnung des Gehäuses eingepresst ist. Beispielsweise könnte ein Aufnahmebauteil bereits mit Druckfedern verbunden sein, z.B. weil diese in passgenaue Ausnehmungen am Aufnahmebauteil befestigt worden sind. Das Aufnahmebauteil kann dann in das Gehäuse eingelegt werden, nach unten gedrückt werden und es werden im heruntergedrückten Zustand oben Metallkissen zwischen Aufnahmebauteil und Gehäuse gelegt. Beim Entspannen der Druckfedern drückt das Aufnahmebauteil dann gegen die Metallkissen und es entsteht eine Vorspannung.

Eine bevorzugte Befestigungsvorrichtung umfasst Anschlagselemente am Gehäuse und/oder am Aufnahmebauteil. Diese Anschlagselemente sind dazu ausgelegt ein Überdrücken von Druckfedern und insbesondere auch von Metallkissen zu verhindern, und/oder eine Bewegung des Aufnahmebauteils entlang der Aufnahmeöffnung zu begrenzen. Solche Anschlagselemente können durch strukturelle Ausformungen an den entsprechenden Teilen vorhanden sein oder aber durch zusätzliche Bauteile gebildet werden. Beispielsweise kann ein (insbesondere zylindrischer oder prismenförmiger) Stößel in eine Druckfeder eingesetzt sein, der ein komplettes Zusammendrücken der Druckfeder verhindert.

Eine bevorzugte Befestigungsvorrichtung zeichnet sich dadurch aus, dass das Aufnahmebauteil, das Gehäuse und die Druckfedern aus Metall gefertigt sind. Es ist dabei bevorzugt, dass Gehäuse und Aufnahmebauteil aus unterschiedlichen Metallen geformt sind und zwischen den elastischen Elementen und dem Gehäuse und/oder dem Aufnahmebauteil eine Trennplatte angeordnet ist, wobei die Trennplatte dazu ausgelegt ist, Gehäuse und Aufnahmebauteil elektrisch voneinander zu isolieren. Es ist dabei bevorzugt, dass zwischen zwei Komponenten der Befestigungsvorrichtung, die aus unterschiedlichen Metallen geformt sind, eine elektrisch isolierende Trennplatte vorliegt. Diese Trennplatte sorgt für eine galvanische Trennung zum Korrosionsschutz der Bauteile. Die Trennplatten können zusätzlich als Vorspannelemente dienen. Es ist dabei bevorzugt, dass zwischen jeglichen zwei Komponenten der Befestigungsvorrichtung, die aus unterschiedlichen Metallen geformt sind, eine galvanisch trennende Trennplatte vorliegt, welches elektrochemische Korrosion der Bauteile durch möglicherweise auftretende Elektrolyte verhindert.

Eine bevorzugte Befestigungsvorrichtung zeichnet sich dadurch aus, dass das Gehäuse und das Aufnahmebauteil aus Platten/Stangen-Halbzeugen hergestellt sind und/oder durch Feingießen hergestellt sind oder durch 3D-Druck hergestellt sind.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
- Figur 1: ein Schienenfahrzeug mit einer Fahrzeugkomponente, die an Befestigungsvorrichtungen aufgehängt ist.
- Figur 2: eine Befestigungsvorrichtung gemäß dem Stand der Technik,
- Figur 3: die Befestigungsvorrichtung nach Figur 2 von vorne,
- Figur 4: eine erfindungsgemäße Befestigungsvorrichtung,
- Figur 5: ein Aufnahmebauteil mit Vertiefungen,
- Figur 6: eine weitere erfindungsgemäße Befestigungsvorrichtung mit einem Gehäuse aus Aluminium.
- Figur 7: eine weitere erfindungsgemäße Befestigungsvorrichtung mit einer einzigen Druckfeder.
- Figur 8: eine Montageeinheit zum axialen Vorspannen einer erfindungsgemäßen Befestigungsvorrichtung in Bezug auf den ringförmigen Ausschnitt,
- Figur 9: eine axial vorgespannte erfindungsgemäße Befestigungsvorrichtung mit Montageeinheit,
- Figur 10: ein Diagramm zur Darstellung des Zusammenhangs zwischen Durchlässigkeit VD und Frequenzverhältnis η für verschiedene Dämpfungen ϑ am Beispiel eines elastisch gelagerten Einmassenschwingers.

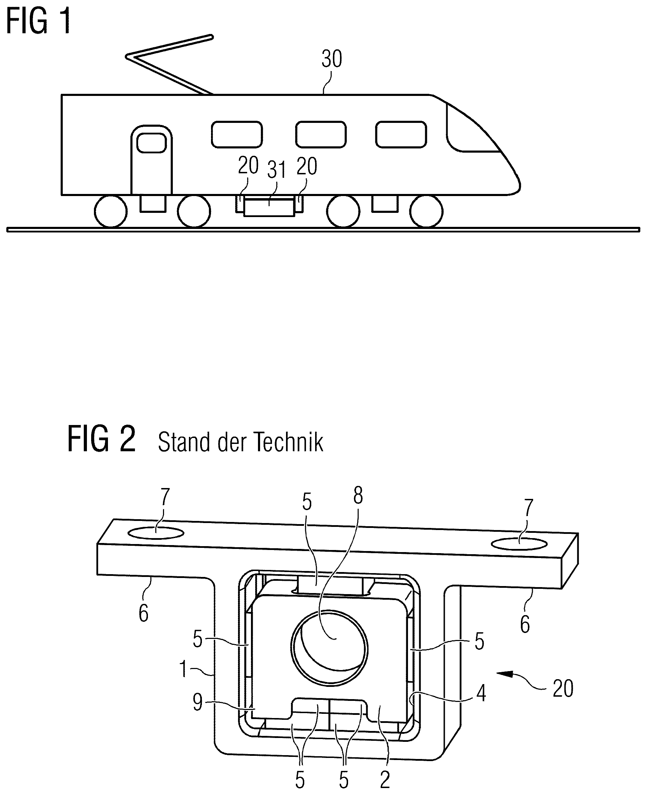

Figur 1 zeigt ein Schienenfahrzeug 30 mit einer Fahrzeugkomponente 31, die an Befestigungsvorrichtungen 20 aufgehängt ist. Das Schienenfahrzeug 30 ist hier eine Lok, kann aber auch ein Wagen oder eine "Multiple Unit", z.B. ein Triebverband, sein. Die Fahrzeugkomponente 31 ist hier unter dem Fahrzeug 30 montiert, kann aber auch auf dessen Dach angebracht sein. Sie wird an beiden Seiten durch zwei Befestigungsvorrichtungen 20 elastisch gehaltert.

Figur 2 zeigt eine Befestigungsvorrichtung 20 zur elastischen Aufhängung einer Fahrzeugkomponente 31 an einem Fahrzeug 30 gemäß dem Stand der Technik. Sie umfasst ein äußeres Gehäuse 1, das an dem Fahrzeug 30 befestigbar ist und ein in dem Gehäuse 1 angeordnetes Aufnahmebauteil 2, das gegenüber dem Gehäuse 1 mittels elastischer Elemente 5 (hier aus Metallkissen) gelagert ist und eine Lagerung 8 für ein Befestigungselement der Komponente des Fahrzeugs 30 aufweist, wobei das Gehäuse 1 einen zentralen, ringförmigen Abschnitt 3 mit der Aufnahmeöffnung 4 zur Aufnahme des Aufnahmebauteils 2 aufweist, und wobei das Aufnahmebauteil 2 unter Zwischenlage der elastischen Elemente 5 (oben, unten und seitlich) in die Aufnahmeöffnung 4 des Gehäuses 1 eingesetzt ist. Unter dem Aufnahmebauteil 2 sind mehr elastische Elemente 5 angeordnet, da die größte Kraft durch die Fahrzeugkomponente 31 nach unten wirkt.

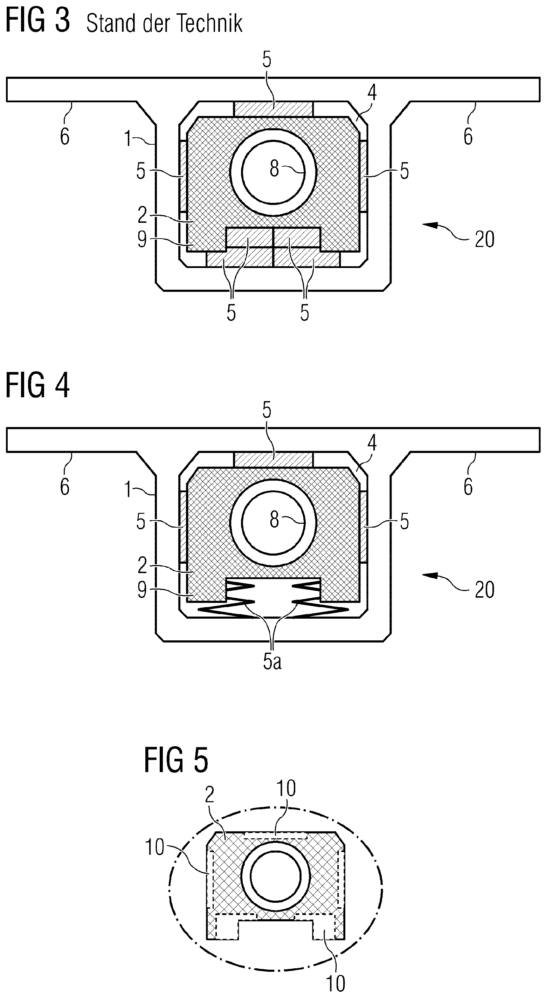

Figur 3 zeigt die Befestigungsvorrichtung 20 nach Figur 2 von vorne. Dies dient der besseren Verdeutlichung des Unterschieds der Erfindung nach Figur 3 zum Stand der Technik.

Figur 4 zeigt eine erfindungsgemäße Befestigungsvorrichtung 20. Sie ist im Grunde aufgebaut wie die Befestigungsvorrichtung nach Figur 2 bzw. 3 mit dem gravierenden Unterschied, dass ein Teil der elastischen Elemente 5 aus Druckfedern 5a gebildet wird. Diese sind hier unter dem Aufnahmebauteil 2 angeordnet, da die größte Kraft durch die Fahrzeugkomponente 31 in deren Ruhelage nach unten wirkt.

Figur 5 zeigt ein Aufnahmebauteil 2 mit Vertiefungen 10. Es handelt sich hier um das Aufnahmebauteil 2, welches in Figur 4 zu sehen ist. Die Metallkissen 5 und die Druckfedern 5a sind hier teilweise in den Vertiefungen 10 angeordnet, um die Bewegungsmöglichkeiten der Metallkissen 5 und Druckfedern 5a zu restringieren, insbesondere um ein Verrutschen zu verhindern und/oder Rutschen/Gleiten nur in bestimmte Richtungen zu ermöglichen.

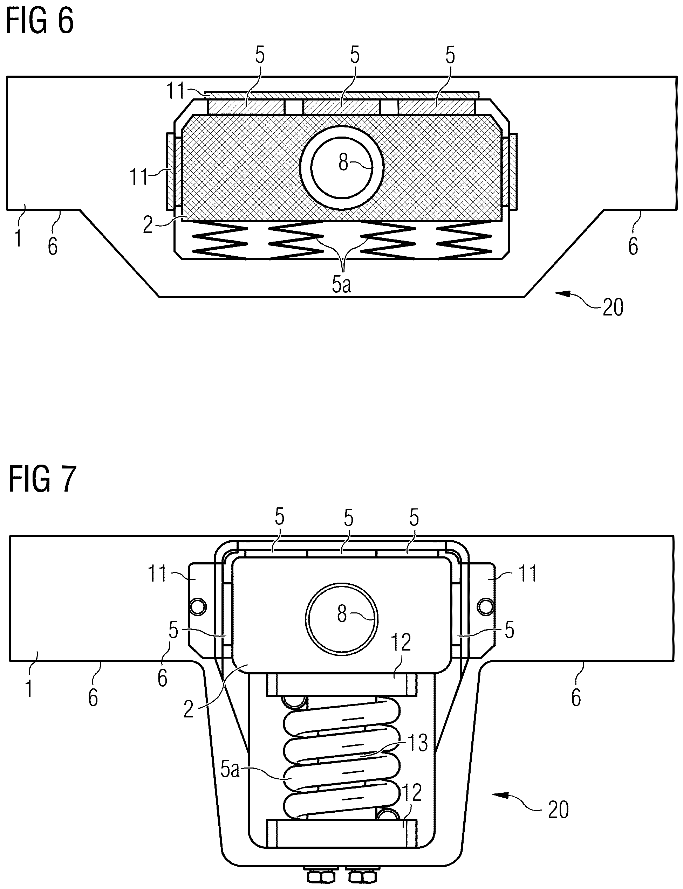

Figur 6 zeigt eine weitere erfindungsgemäße Befestigungsvorrichtung 20 mit einem Gehäuse 1 aus Aluminium. Sie ist nach demselben Prinzip der Figur 4 aufgebaut mit dem Unterschied, dass das Gehäuse 1 etwas robuster gestaltet ist. Zudem ist das Aufnahmebauteil 2 hier mittels vier Druckfedern 5a nach unten und drei Metallkissen 5 nach oben gelagert. In diesem Beispiel wird zudem angenommen, dass das Aufnahmebauteil 2 und die elastischen Elemente 5 aus Edelstahl bestehen. Um Korrosion vorzubeugen, sind die Teile daher vom Gehäuse durch elektrisch isolierende Trennplatten 11 galvanisch getrennt. Das Gehäuse könnte auch aus Stahl sein, aber auch dann wären die Trennplatten 11 bevorzugt um das Gehäuse 1 von den Edelstahlkissen 5 galvanisch zu trennen.

Figur 7 zeigt eine weitere erfindungsgemäße Befestigungsvorrichtung 20 mit einer einzigen Druckfeder 5a. Auch hier wird das Prinzip der Figuren 4 und 6 angewandt, wobei angenommen werden kann, das Gehäuse 1 würde aus Aluminium oder Stahl und das Aufnahmebauteil 2 und die elastischen Elemente 5 aus Edelstahl bestehen. Die Druckfeder 5a ist hier vergleichsweise stark ausgestaltet und wird mittels Vorspannelementen 12 über und unter der Druckfeder 5a vorgespannt. Die Dicke und Anzahl der Vorspannelemente 12 haben einen Einfluss auf den Grad der Vorspannung. In der Druckfeder 5a ist ein Abstandhalter 13 zu erkennen.

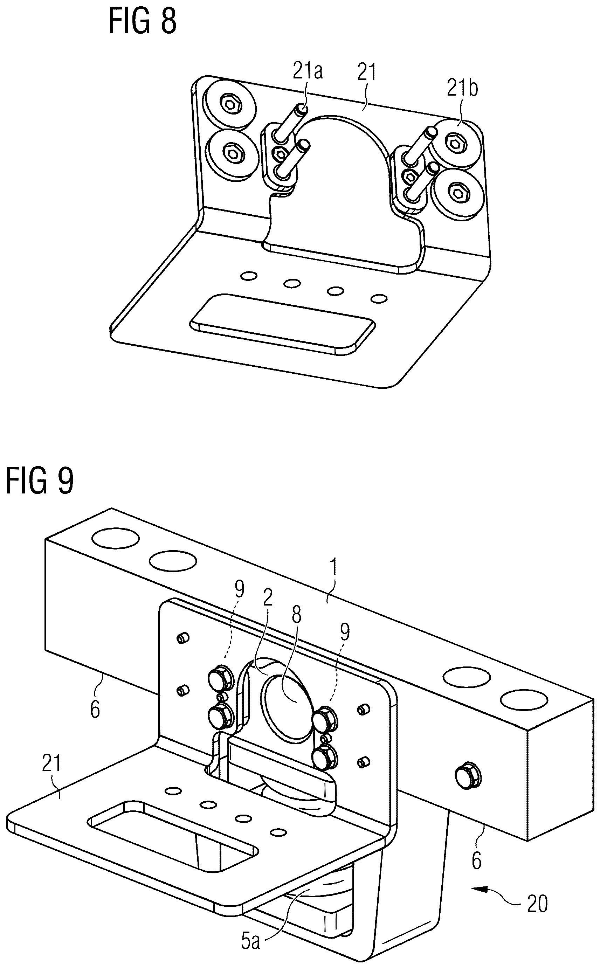

Figur 8 zeigt eine Montageeinheit 21 zum Montieren einer Fahrzeugkomponente 31 mit einer erfindungsgemäßen Befestigungsvorrichtung 20 an einem Fahrzeug 30 (s. Figur 1). Diese Montageeinheit 21 ist ein rechtwinklig gebogenes Blech, welches hier mit vier Schrauben 21a versehen ist, die in Löcher des Aufnahmebauteils 2 einer Befestigungsvorrichtung 20 eingreifen und dort befestigt werden können. Mittels Gleitscheiben 21b kann die Montageeinheit 21 am Gehäuse 1 der Befestigungsvorrichtung 20 entlang gleiten. Diese Gleitscheiben 21b können z.B. aus Kunststoff oder selbstschmierenden Metallen wie Bronze gefertigt sein.

Figur 9 zeigt ein Vorspannen einer erfindungsgemäßen Befestigungsvorrichtung 20 mit einer Montageeinheit 21 aus Figur 8. Die Montageeinheit 21 ist hier an einem Aufnahmebauteil 2 einer Befestigungsvorrichtung 20 montiert (dessen Schauben 21a wurden durch hier nicht sichtbare Bohrungen 7 geschoben und dort verschraubt) und kann mit ihren Gleitscheiben 21b am Gehäuse 1 der Befestigungsvorrichtung 20 entlang gleiten. Die Montageeinheit 21 wird nach Montage der Befestigungsvorrichtung 20 fest mit dem Aufnahmebauteil 2 (an dessen Rückseite) verschraubt und verhindert damit ein unkontrolliertes Auseinandergleiten des Lagers selbst und stellt die Vorspannung oder ein Spiel axial zur ringförmigen Anordnung der elastischen Elemente 5 ein. Es ist auch möglich, ein definiertes Spiel einzustellen, also eine Vorspannung kleiner gleich Null.

Zur Montage am Fahrzeug wird die Befestigungsvorrichtung 20 zuerst an der anzubringenden Fahrzeugkomponente 31 (s. Figur 1) mit dem Lager 8 im Aufnahmebauteil 2 montiert. Darauf folgt die Montage der Fahrzeugkomponente 31 mit der Befestigungsvorrichtung 20 an der tragenden Struktur des Fahrzeugs 30. Hierbei bewegt sich das Aufnahmebauteil 2 durch das Gewicht der Fahrzeugkomponente 31 nach unten und die Druckfeder 5a wird gestaucht. Die Montageeinheit 21 lässt diese Bewegung zu, indem sie am Gehäuse durch die Gleitscheiben 21b entlanggleitet. Nach abgeschlossener Montage der Fahrzeugkomponente 31 am Fahrzeug 30 sollte die Montageeinheit 21 entfernt werden.

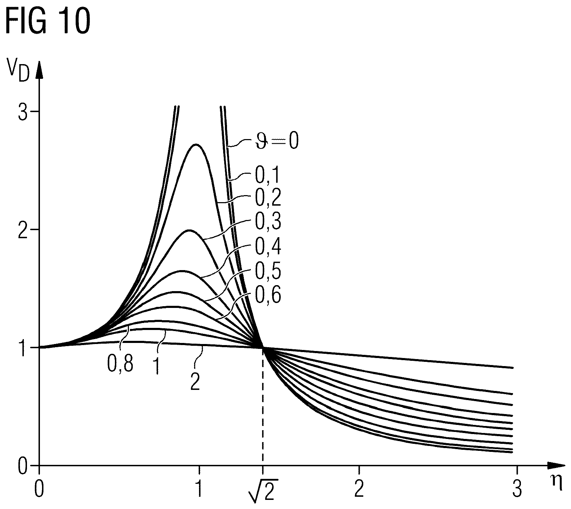

Figur 10 zeigt ein Diagramm zur Darstellung des Zusammenhangs zwischen Durchlässigkeit VD und Frequenzverhältnis η für verschiedene Dämpfungen ϑ am Beispiel des elastisch gelagerten Einmassenschwingers.

Um eine mechanische Entkopplung zu erreichen, sollte eine Fahrzeugkomponente 31 (s. Figur 1) möglichst elastisch weich gelagert werden. Um das Fahrzeug 30 vor der Übertragung der Schwingung der Fahrzeugkomponente 31 zu schützen, ist eine aktive Isolation bzw. Quellenisolierung von Vorteil. Dies wird durch eine möglichst geringe Durchlässigkeit, VD < 1, erreicht. Die Durchlässigkeit ist das Verhältnis der Kraft auf die Umgebung zur Erregerkraft (VD = F_{f}/Fₑ) mit der auf das Fahrzeug wirkenden Kraft F_{f} und der durch die Fahrzeugkomponente hervorgerufene Erregerkraft Fₑ.

Die Höhe der Durchlässigkeit VD steht in einem schwingenden System in Zusammenhang mit dem Frequenzverhältnis η. Das Frequenzverhältnis η berechnet sich aus der Erregerfrequenz ω der gelagerten Großkomponente, z.B. Betriebsfrequenz des Transformators (16,7, 50 oder 60 Hz), und der Eigenfrequenz ω₀ des Systems (η = ω/ω₀). Der Wert η ist also maximal, wenn die Erregerfrequenz der Eigenfrequenz entspricht.

Betrachtet man ein Diagramm, welches den Zusammenhang zwischen Durchlässigkeit VD und Frequenzverhältnis η für verschiedene Dämpfungen ϑ (unterschiedliche Kurven) anzeigt, dann sieht man von dem Wert 1 startend im unterkritischer Bereich bei zunehmenden Frequenzverhältnis η zunächst eine steilen Anstieg der Durchlässigkeit VD bis zu einem sehr großen Wert bei η = 1 (bei niedrigen Dämpfungen besagte Resonanzkatastrophe = "kritischer Bereich") gefolgt vom überkritischem Bereich, einem ähnlich starken Abfall zurück auf den Wert 1 bei ungefähr η = √2. Für größere η fällt der Wert der Durchlässigkeit VD auf unter 1, was der gewünschte Bereich ist. Das System arbeitet in diesem Bereich dann schwingungsisolierend. Deshalb liegt in diesem Bereich der ideale Betriebspunkt einer isolierenden Lagerung für die Befestigungsvorrichtungen.

Aus dem Diagramm wird ersichtlich, dass für Frequenzverhältnisse im Bereich 0 < η < √2 eine Verstärkung der Erregerkraft auf die Umgebung entsteht. Für Frequenzverhältnisse η > √2 ist die Durchlässigkeit VD < 1 unabhängig der Dämpfung, die Dämpfung hat jedoch einen Einfluss darauf um wie viel VD kleiner als 1 ist. Das System arbeitet in diesem Bereich schwingungsisolierend, deshalb ist hier der ideale Betriebspunkt einer isolierenden Lagerung.

Die Eigenfrequenz ω₀ des Systems Fahrzeugkomponente & Befestigungsvorrichtung(en) berechnet sich aus der (resultierenden) Federkonstante k der Befestigungsvorrichtung(en) und der Masse m der Fahrzeugkomponente (ω₀² = k/m).

Für ein großes Frequenzverhältnis muss die Steifigkeit im Betriebspunkt möglichst gering bzw. weich sein und die Masse m möglichst hoch sein. Eine zusätzliche Erhöhung der Masse m wird aufgrund eines dadurch höheren Fahrzeuggewichts ausgeschlossen und es wird die Masse der zu lagernde Komponente als unveränderlich angenommen. Somit verbleibt die Federkonstante k (bzw. Steifigkeit der Lagerung im Betriebspunkt) als Einflussgröße auf das Schwingungsverhalten.

Da eine Vorspannung eines Systems aus Schraubendruckfedern und Metallkissen dessen resultierende Federkonstante verändert, kann sowohl durch eine geeignete Wahl der Federn als auch durch eine geeignete Einstellung der Vorspannung gezielt eine Durchlässigkeit VD auf unter 1 eingestellt werden. Die Metallkissen weisen aufgrund der inneren Reibung des Drahtgeflechtes einen hohen Dämpfungsfaktor von ca. 0,4 auf. Schraubendruckfedern hingegen weißen nahezu keine Dämpfung auf. Durch die Kombination von Schraubendruckfedern und Metallkissen ist es aufgrund der von den Metallkissen eingebrachten Dämpfung möglich, bei kurzzeitig auftretenden Anregungen im unterkritischen Frequenzbereich auszuschließend, dass es zur Resonanzkatastrophe kommt. Diese Anregungen werden zwar von der Lagerung verstärkt, entsprechen aber nicht dem langzeitig auftretendem Betriebsfall, Beispiele hierfür sind für fahrzeugseitige Anregungen eine langsame Fahrt durch eine Weiche oder das langsame Überfahren von Schienenfehlern wie "Squats", "Eindrückungen" oder "Schlupfwellen", Beispiel für eine komponentenseitige Anregung ist das Anlaufen eines Motors (da er kurzzeitig langsam rotiert ist auch die Anregung sehr niederfrequent und durchläuft den Bereich in welchem diese verstärkt wird). Durch die Verwendung der Feder ist es möglich sicherzustellen, dass die Betriebsfrequenz der Komponente immer im überkritischen Bereich des Systems ist, wodurch diese von dem Wagenkasten entkoppelt wird. Hierdurch wird der in den Wagenkasten übertragene Körperschall reduziert und der Fahrkomfort gesteigert. Bei der alleinigen Verwendung von Metallkissen gelingt dies vor allem für niederfrequent angeregte Komponenten nicht, weshalb diese Lagervarianten häufig im unterkritischen oder gar kritischen Frequenzbereich betrieben werden, was zu einer Verstärkung der Störgeräusche führt. In diesen Fällen dienen die Lager dann vorrangig der Kompensation von thermischen Dehnungen nicht aber der Entkopplung. Durch die Verstärkung des übertragenen Körperschalls wird der Fahrkomfort gemindert.

Es wird abschließend noch einmal darauf hingewiesen, dass es sich bei der vorhergehend detailliert beschriebenen Erfindung lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen Begriffe wie "Einheit" nicht aus, dass die betreffenden Komponenten aus mehreren zusammenwirkenden Teil-Komponenten bestehen, die ggf. auch räumlich verteilt sein können. Der Begriff "eine Anzahl" ist als "mindestens ein(e)" zu lesen. Unabhängig vom grammatikalischen Geschlecht eines bestimmten Begriffes sind Personen mit männlicher, weiblicher oder anderer Geschlechteridentität mit umfasst.

## Patentansprüche

1. Befestigungsvorrichtung (20) zur elastischen Aufhängung einer Fahrzeugkomponente (31) an einem Fahrzeug (30), die Befestigungsvorrichtung (20) umfassend ein äußeres Gehäuse (1), das an dem Fahrzeug (30) befestigbar ist und ein in dem Gehäuse (1) angeordnetes Aufnahmebauteil (2), das gegenüber dem Gehäuse (1) mittels elastischer Elemente (5) gelagert ist und eine Lagerung (8) für ein Befestigungselement der Komponente des Fahrzeugs (30) aufweist, wobei das Gehäuse (1) einen ringförmigen Abschnitt (3) mit der Aufnahmeöffnung (4) zur Aufnahme des Aufnahmebauteils (2) aufweist, und wobei das Aufnahmebauteil (2) unter Zwischenlage der elastischen Elemente (5) in die Aufnahmeöffnung (4) des Gehäuses (1) eingesetzt ist und zumindest ein Teil der elastischen Elemente (5) aus Druckfedern (5a) gebildet wird.

2. Befestigungsvorrichtung (20) nach Anspruch 1,
wobei ein Teil der elastischen Elemente (5) von Elastomer- und/oder Metallkissen (5) gebildet wird, bevorzugt von Ganzmetallkissen aus einem Drahtgeflecht.

3. Befestigungsvorrichtung (20) nach einem der Ansprüche 1 oder 2,
wobei das Gehäuse (1) einstückig ausgebildet ist, bevorzugt aus Stahl oder Aluminium, insbesondere als Frästeil, und bevorzugt von dem zentralen Abschnitt (3) aus nach außen vorstehende Befestigungsabschnitte (6) zur Befestigung des Gehäuses (1) an dem Rohbau des Fahrzeugs (30) aufweist.

4. Befestigungsvorrichtung (20) nach einem der Ansprüche 1 bis 3,
wobei die Druckfedern (5a) so angeordnet sind, dass sie vorgespannt sind, wobei eine Anzahl von Vorspannelementen (12) an zumindest einer der Stirnseiten der Druckfedern (5a) angeordnet ist.

5. Befestigungsvorrichtung (20) nach einem der Ansprüche 1 bis 4,
wobei das Aufnahmebauteil (2) an seinen dem Gehäuse (1) zugewandten Umfangsabschnitten Vertiefungen (10), zur Aufnahme der elastischen Elemente (5) aufweist und/oder das Gehäuse (1) an seinen dem Aufnahmebauteil (2) zugewandten Umfangsabschnitten Vertiefungen (10), zur Aufnahme der elastischen Elemente (5) aufweist.

6. Befestigungsvorrichtung (20) nach einem der vorangehenden Ansprüche,
wobei das Aufnahmebauteil (2) und die elastischen Elemente (5) vormontiert sind und diese vormontierte Einheit in die Aufnahmeöffnung (4) des Gehäuses (1) eingepresst ist.

7. Befestigungsvorrichtung (20) nach einem der vorangehenden Ansprüche,
umfassend Anschlagselemente (9) am Gehäuse (1) und/oder am Aufnahmebauteil (2) dazu ausgelegt
- ein Überdrücken von Druckfedern (5a) und insbesondere auch Metallkissen (5) zu verhindern, und/oder
- eine Bewegung des Aufnahmebauteils (2) entlang der Aufnahmeöffnung (4) zu begrenzen.

8. Befestigungsvorrichtung (20) nach einem der vorangehenden Ansprüche,
wobei das Aufnahmebauteil (2), das Gehäuse (1) und die Druckfedern (5a) aus Metall gefertigt sind, bevorzugt wobei Gehäuse (1) und Aufnahmebauteil (2) aus unterschiedlichen Metallen geformt sind und zwischen den elastischen Elementen (5) und dem Gehäuse (1) und/oder dem Aufnahmebauteil (2) eine Trennplatte (11) angeordnet ist, wobei die Trennplatte (11) dazu ausgelegt ist, Gehäuse (1) und Aufnahmebauteil (2) elektrisch voneinander zu isolieren, bevorzugt wobei zwischen jeglichen zwei Komponenten der Befestigungsvorrichtung (20), die aus unterschiedlichen Metallen geformt sind, eine elektrisch isolierende Trennplatte (11) vorliegt.

9. Befestigungsvorrichtung (20) nach einem der vorangehenden Ansprüche,
wobei das Gehäuse (1) und das Aufnahmebauteil (2) aus Platten/Stangen-Halbzeugen hergestellt sind und/oder durch Feingießen hergestellt sind oder durch 3D-Druck hergestellt sind.

10. Fahrzeug (30), insbesondere Schienenfahrzeug, umfassend eine Mehrzahl von Befestigungsvorrichtungen (20) nach einem der vorangehenden Ansprüchen, welche an dem Fahrzeug (30) befestigt sind, insbesondere am Fahrzeugrahmen (30), und bevorzugt eine in diesen Befestigungsvorrichtungen (20) gehalterte Fahrzeugkomponente (31), insbesondere umfassend einen Transformator.
